# EUROPEAN PATENT APPLICATION

(11) **EP 4 736 688 A2**
(43) Date of publication of application: **06.05.2026**
(21) Application number: 26164786.1
(22) Date of filing: 03.04.2020
(51) Int. Cl.: A24F 40/85

(54) **AEROSOL GENERATING APPARATUS**

(30) Priority: 04.04.2019 WO PCT/CN2019/081557; 05.08.2019 GB 201911189
(62) Divisional of application: 20721154.1
(71) Applicant: Nicoventures Trading Limited, London WC2R 3LA (GB)
(72) Inventor: Wu, Ze Xin, Shenzhen, 518103 (CN); Fung, Chi Wai, Shenzhen, 518103 (CN); Wei, Guang Yan, Shenzhen, 518103 (CN); Sheridan, James, London, WC2R 3LA (GB)
(74) Representative: Dehns

(57) **Abstract**

Provided is an assembly for use in an apparatus for heating aerosolizable material to volatilize at least one component of the aerosolizable material to generate an inhalable aerosol. The assembly having a structure delimiting an opening through which aerosolizable material can be removably inserted into the apparatus, a door coupled to the structure and movable between an open position where access to the opening is unrestricted and a closed position where access to the opening is restricted, and a latching arrangement configured to hold the door in at least one of the open position and the closed position when the door is in the one of the open position and the closed position until an external force is applied, in use, to release the latching arrangement.

## Description

### TECHNICAL FIELD

The present invention relates to assemblies for use with apparatus for heating aerosolisable material to volatalise at least one component of the aerosolisable material and systems comprising apparatus for heating aerosolisable material to volatalise at least one component of the aerosolisable material.

### BACKGROUND

Smoking articles such as cigarettes, cigars and the like burn tobacco during use to create tobacco smoke. Attempts have been made to provide alternatives to these articles that burn tobacco by creating products that release compounds without burning. Examples of such products are heating devices which release compounds by heating, but not burning, the material. The material may be for example tobacco or other non-tobacco products, which may or may not contain nicotine.

### SUMMARY

A first aspect of the present invention provides an assembly for use in an apparatus for heating aerosolisable material to volatalise at least one component of the aerosolisable material to generate an inhalable aerosol, the assembly comprising: a structure delimiting an opening through which aerosolisable material can be removably inserted into the apparatus; a door coupled to the structure and movable between an open position where access to the opening is unrestricted, and a closed position where access to the opening is restricted; and a latching arrangement configured to hold the door in at least one of the open position and the closed position when the door is in the one of the open position and the closed position until an external force is applied, in use, to release the latching arrangement.

In an exemplary embodiment, the latching arrangement comprises a first part in the structure and a second, separate part in the door, wherein the first part is configured to interact with the second part to hold the door in the one of the open position and the closed position when the door is in the one of the open position and the closed position.

In an exemplary embodiment, the latching arrangement is further configured to bias the door towards the one of the open position and the closed position when the door is between the one of the open position and the closed position and an intermediate position that is between the open and the closed positions.

In an exemplary embodiment, the assembly further comprises at least one guide for guiding the movement of the door relative to the structure.

In an exemplary embodiment, the guide comprises at least one of a male or female member for engaging with a corresponding other of a male or female member of the structure.

In an exemplary embodiment, the latching arrangement is a mechanical latching arrangement.

In an exemplary embodiment, the mechanical latching arrangement comprises a cam, the cam comprising a cam element disposed in one of the door and the structure and at least one follower disposed in the other of the door and the structure.

In an exemplary embodiment, the door defines the cam element, the cam element comprises one or more detents, and the at least one follower is configured to engage with the one or more detents when the door is in the one of the open and the closed position to hold the door in the respective open or closed position.

In an exemplary embodiment, the assembly is configured so that the at least one follower is biased towards the cam element.

In an exemplary embodiment, the at least one follower is biased towards the cam element by a spring.

In an exemplary embodiment, a surface of the cam element is configured to engage with the at least one follower to depress the at least one follower when the door is between the open and the closed positions.

In an exemplary embodiment, the assembly comprises a spring plunger, the spring plunger comprising a depressible member movably retained in a housing and biased towards the cam element, wherein the at least one follower is the depressible member.

In an exemplary embodiment, the depressible member is configured to roll relative to the cam element when the door is moved relative to the structure.

In an exemplary embodiment, the depressible member is spherical or cylindrical.

In an exemplary embodiment, the one or more detents comprises at least two detents located at opposite end portions of the door in a direction of motion of the door.

In an exemplary embodiment, the latching arrangement is a magnetic latching arrangement.

In an exemplary embodiment, the magnetic latching arrangement comprises at least one stationary magnet disposed in the structure and at least one door magnet disposed in the door, wherein the latching arrangement is configured to magnetically hold the door in one of the open position or the second position when the door is in the open position or the closed position.

In an exemplary embodiment, the magnetic latching arrangement is configured to: magnetically hold the door in the open position when the door is in the open position; and magnetically hold the door in the closed position when the door is in the closed position.

In an exemplary embodiment, the at least one door magnet has a first and a second magnetic pole, and the at least one stationary magnet has a first and a second magnetic pole, wherein: the first and second magnetic poles of each magnet have opposite polarity; the first and second magnetic poles of each magnet are oriented in a direction substantially orthogonal to a direction of motion of the door; and the first pole of the door magnet and the first pole of the stationary magnet are facing in substantially opposite directions and are of the same polarity.

In an exemplary embodiment, the at least one door magnet has a first and a second magnetic pole, and the at least one stationary magnet has a first and a second magnetic pole, wherein: the first and second magnetic poles of each magnet have opposite polarity; the first and second magnetic poles of each magnet are oriented in a direction substantially parallel to a direction of motion of the door; and the first pole of the door magnet and the first pole of the stationary magnet are facing in substantially opposite directions and are of the same polarity.

In an exemplary embodiment, the at least one door magnet and the least one stationary magnet is substantially cuboidal, each having a longer edge in the direction of motion; wherein the centroid of the at least one door magnet is equidistant, in the direction of motion, from the ends of the door; and wherein the centroid of the at least one stationary magnet is equidistant, in the direction of motion, from the open and the closed position.

In an exemplary embodiment, the door has a lower face adjacent to an upper face of the structure, wherein: the at least one door magnet is disposed within a corresponding recess in the lower face of the door so as not to be visible in use; and the at least one stationary magnet is located beneath the upper face of the structure so as not to be visible in use.

In an exemplary embodiment, the door is substantially flat and elongate in the direction of motion.

In an exemplary embodiment, the door is preferably between 14 mm and 15 mm in length in a direction parallel to the sliding direction, preferably between 11 mm and 12 mm in length perpendicular to the direction of motion, and preferably between 1 mm and 2 mm thick.

In an exemplary embodiment, the structure comprises a recessed portion having a complementary shape and size to the door, the recessed portion configured to receive the door in use and to permit movement of the door between the open and the closed position.

In an exemplary embodiment, a surface, such as an upper surface, of the recessed portion further comprises the opening, and the opening is located towards an end of the recessed portion corresponding to the closed position.

In an exemplary embodiment, the material of the structure and the door is Polycarbonate/Acrylonitrile Butadiene Styrene (PC/ABS).

In an exemplary embodiment, the aerosolisable material comprises tobacco and/or is reconstituted and/or is in the form of a gel and/or comprises an amorphous solid.

A second aspect of the present invention provides a system comprising a heating apparatus arranged to heat aerosolisable material to volatalise at least one component of the aerosolisable material, and an assembly according to the first aspect of the present invention for use with the heating apparatus, wherein the heating apparatus comprises at least one heater element arranged within a heater housing, the heater element configured to heat the aerosolisable material in use.

In an exemplary embodiment, the aerosolisable material comprises tobacco and/or is reconstituted and/or is in the form of a gel and/or comprises an amorphous solid.

Further features and advantages of the invention will become apparent from the following description of preferred embodiments of the invention, given by way of example only, which is made with reference to the accompanying drawings.

### BRIEF DESCRIPTION OF THE DRAWINGS

Embodiments of the invention will now be described, by way of example only, with reference to the accompanying drawings, in which:
Figure 1 shows a schematic perspective view of an example of an apparatus for heating aerosolisable material to volatilise at least one component of the aerosolisable material, wherein the apparatus is shown with a consumable article comprising aerosolisable material inserted;
Figure 2 shows a schematic front view of the example apparatus of Figure 1 with the consumable article inserted;
Figure 3 shows a schematic right-side view of the example apparatus of Figure 1 with the consumable article inserted;
Figure 4 shows a schematic left-side view of the example apparatus of Figure 1 with the consumable article inserted;
Figure 5 shows a schematic front cross-sectional view of the example apparatus of Figure 1 with the consumable article inserted through line A-A shown in Figure 4;
Figure 6 shows a schematic front cross-sectional view of the example apparatus of Figure 1 without a consumable article inserted;
Figure 7 shows a schematic perspective view of an example of a door assembly for use with an apparatus for heating aerosolisable material, wherein the door assembly comprises a latching arrangement and the door is shown in an open position;
Figure 8 shows a schematic perspective view of the example door assembly of Figure 7, wherein the door is shown in a closed position;
Figure 9 shows a schematic exploded view of the example door assembly of Figure 7, wherein the door assembly comprises a mechanical latching arrangement;
Figure 10 shows a plan view of an example door assembly for use with an apparatus for heating aerosolisable material, wherein the door is shown in a closed position;
Figure 11 shows a side cross-sectional view of the example door assembly of Figure 10 through the line T-T wherein the door assembly comprises a mechanical latching arrangement and wherein the door is shown in an open position;
Figure 12 shows a side cross-sectional view of the example door assembly of Figure 11, wherein the door is shown in a closed position;
Figure 13 shows a schematic perspective view of an example of a door assembly for use with an apparatus for heating aerosolisable material, wherein the door assembly comprises a magnetic latching arrangement, and wherein the door is shown in an open position;
Figure 14 shows a schematic perspective view of the example door assembly of Figure 13, wherein the door is shown in a closed position;
Figure 15 shows a schematic perspective view of the underside of the example door assembly of Figure 13;
Figure 16 shows a schematic perspective view of a top-panel structure of the example door assembly of Figure 13;
Figure 17 shows a schematic perspective view of the underside of a door of the example door assembly of Figure 13;
Figure 18 shows a schematic perspective view of the underside of the door of Figure 13, wherein the door comprises door magnets and a track assembly;
Figure 19 shows a schematic side cross-sectional view of the example door assembly of Figure 10 in the closed position through line T-T wherein the door assembly comprises a magnetic latching arrangement;
Figure 20 shows a schematic side cross-sectional view of the example door assembly of Figure 10 in the closed position through line U-U when the door assembly comprises a magnetic latching arrangement;
Figure 21 shows a simplified schematic side cross-sectional view of the example door assembly of Figure 19 in the closed position;
Figure 22 shows a simplified schematic plan view of the example door assembly of Figure 13, wherein the door is shown in the closed position, in an intermediate position, and in the open position.

### DETAILED DESCRIPTION

As used herein, the term "aerosolisable material" includes materials that provide volatilised components upon heating, typically in the form of vapour or an aerosol. "Aerosolisable material" may be a non-tobacco-containing material or a tobacco-containing material. "Aerosolisable material" may, for example, include one or more of tobacco per se, tobacco derivatives, expanded tobacco, reconstituted tobacco, tobacco extract, homogenised tobacco or tobacco substitutes. The aerosolisable material can be in the form of ground tobacco, cut rag tobacco, extruded tobacco, reconstituted tobacco, reconstituted aerosolisable material, liquid, gel, amorphous solid, gelled sheet, powder, or agglomerates, or the like. "Aerosolisable material" also may include other, non-tobacco, products, which, depending on the product, may or may not contain nicotine. "Aerosolisable material" may comprise one or more humectants, such as glycerol or propylene glycol. The term "aerosol generating material" may also be used herein interchangeably with the term "aerosolisable material".

As noted above, the aerosolisable material may comprise an "amorphous solid", which may alternatively be referred to as a "monolithic solid" (i.e. non-fibrous), or as a "dried gel". The amorphous solid is a solid material that may retain some fluid, such as liquid, within it. In some cases, the aerosolisable material comprises from about 50wt%, 60wt% or 70wt% of amorphous solid, to about 90wt%, 95wt% or 100wt% of amorphous solid. In some cases, the aerosolisable material consists of amorphous solid.

As used herein, the term "sheet" denotes an element having a width and length substantially greater than a thickness thereof. The sheet may be a strip, for example.

As used herein, the term "heating material" or "heater material", in some examples, refers to material that is heatable by penetration with a varying magnetic field, for example when the aerosolisable material is heated by an inductive heating arrangement.

Other forms of heating a heating material include resistive heating which involves electrically resistive heating elements that heat up when an electric current is applied to the electrically resistive heating element, thus transferring heat by conduction to the heating material.

As used herein, the term "centroid" refers to the geometric centre of a 3-dimensional shape.

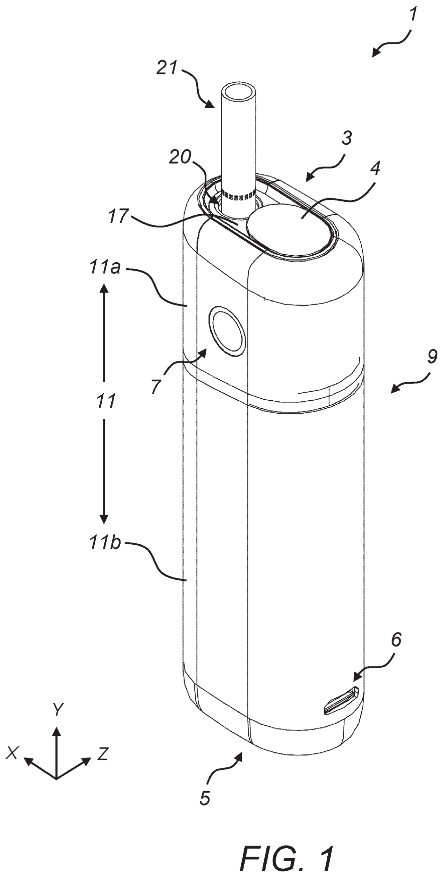

Referring to Figure 1, there is shown a schematic perspective view of an apparatus 1 according to an embodiment of the invention. The apparatus 1 is for heating aerosolisable material to volatilise at least one component of the aerosolisable material to form an aerosol for inhalation by a user. In this embodiment, the aerosolisable material comprises tobacco, and the apparatus 1 is a tobacco heating product (also known in the art as a tobacco heating device or a heat-not-burn device). The apparatus 1 is a handheld device for inhalation of the aerosolisable material by a user of the handheld device.

The apparatus 1 comprises a first end 3 and a second end 5, opposite the first end 3. The first end 3 is sometimes referred to herein as the mouth end or proximal end of the apparatus 1. The second end 5 is sometimes referred to herein as the distal end of the apparatus 1. The apparatus 1 has an on/off button 7 to allow the apparatus 1, as a whole, to be switched on and off as desired by a user of the apparatus 1.

In broad outline, the apparatus 1 is configured to generate an aerosol to be inhaled by a user by heating an aerosol generating material. In use, a user inserts an article 21 into the apparatus 1 and activates the apparatus 1, e.g. using the button 7, to cause the apparatus 1 to begin heating the aerosol generating material. The user subsequently draws on a mouthpiece 21b of the article 21 near the first end 3 of the apparatus 1 to inhale an aerosol generated by the apparatus 1. As a user draws on the article 21, generated aerosol flows through the apparatus 1 along a flow path towards the proximal end 3 of the apparatus 1.

In examples a vapour is produced that then at least partly condenses to form an aerosol before exiting the apparatus 1 to be inhaled by the user.

In this respect, first it may be noted that, in general, a vapour is a substance in the gas phase at a temperature lower than its critical temperature, which means that for example the vapour can be condensed to a liquid by increasing its pressure without reducing the temperature. On the other hand, in general, an aerosol is a colloid of fine solid particles or liquid droplets, in air or another gas. A "colloid" is a substance in which microscopically dispersed insoluble particles are suspended throughout another substance.

For reasons of convenience, as used herein the term aerosol should be taken as meaning an aerosol, a vapour or a combination of an aerosol and vapour.

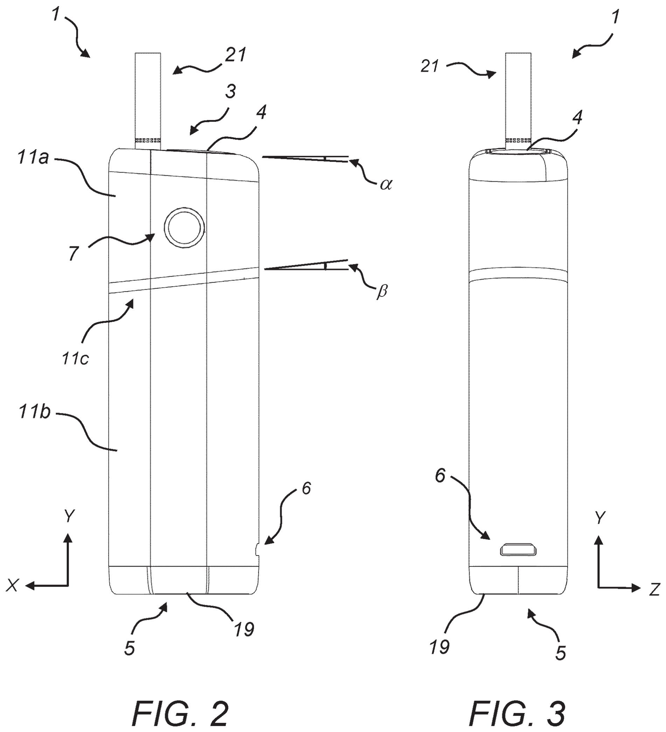

The apparatus 1 comprises a casing 9 for locating and protecting various internal components of the apparatus 1. The casing 9 is therefore an external housing for housing the internal components. In the embodiment shown, the casing 9 comprises a sleeve 11 that encompasses a perimeter of the apparatus 1, capped with a structure, preferably a top panel structure 17, at the first end 3, which defines generally the 'top' of the apparatus 1 and a bottom panel 19, at the second end 5 (see Figures 2 to 5), which defines generally the 'bottom' of the apparatus 1.

The sleeve 11 comprises a first sleeve 11a and a second sleeve 11b. The first sleeve 11a is provided at a top portion of the apparatus 1, shown as an upper portion of the apparatus 1, and extends away from the first end 3. The second sleeve 11b is provided at a bottom portion of the apparatus 1, shown as a lower portion of the apparatus 1, and extends away from the second end 5. The first sleeve 11a and second sleeve 11b each encompass a perimeter of the apparatus 1. That is, the apparatus 1 comprises a longitudinal axis in a Y-axis direction, and the first sleeve 11a and the second sleeve 11b each surround the internal components in a direction radial to the longitudinal axis.

In this embodiment, the first sleeve 11a and a second sleeve 11b are removably engaged with each other. In this embodiment, the first sleeve 11a is engaged with the second sleeve 11b in a snap-fit arrangement comprising grooves and recesses.

In some embodiments, the top panel structure 17 and/or the bottom panel 19 may be removably fixed to the corresponding first and second sleeves 11a, 11b, respectively, to permit easy access to the interior of the apparatus 1. In some embodiments, the sleeve 11 may be "permanently" fixed to the top panel structure 17 and/or the bottom panel 19, for example to deter a user from accessing the interior of the apparatus 1. In one embodiment, the panels 17 and 19 are made of a plastics material, including for example glass-filled nylon formed by injection moulding, and the sleeve 11 is made of aluminium, though other materials and other manufacturing processes may be used.

The top panel structure 17 of the apparatus 1 has an opening 20 at the mouth end 3 of the apparatus 1 through which, in use, the consumable article 21 containing aerosolisable material is inserted into the apparatus 1 and removed from the apparatus 1 by a user. In this embodiment, the consumable article 21 acts as the mouthpiece for the user to place between lips of the user. In other embodiments, an external mouthpiece may be provided wherein at least one volatilised component of the aerosolisable material is drawn through the mouthpiece. When an external mouthpiece is used, the aerosolisable material is not provided in the external mouthpiece.

The opening 20 in this embodiment is opened and closed by a door 4. In the embodiment shown, the door 4 is movable between a closed position and an open position to allow for insertion of the consumable article 21 into the apparatus 1 when in the open position. The door 4 is configured to move bi-directionally along an X-axis direction.

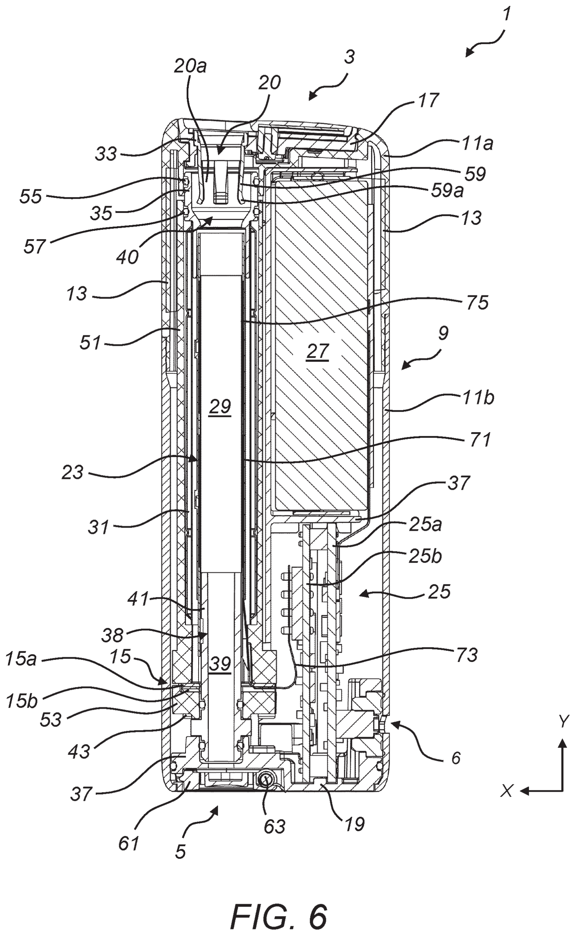

A connection port 6 is shown at the second end 5 of the apparatus 1. The connection port 6 is for connection to a cable and a power source 27 (shown in Figure 6) for charging the power source 27 of the apparatus 1. The connection port 6 extends in a Z-axis direction from a front side of the apparatus 1 to a rear side of the apparatus 1. As shown in Figure 3, the connection port 6 is accessible on a right-side of the apparatus 1 at the second end 5 of the apparatus 1. Advantageously, the apparatus 1 may stand on the second end 5 whilst charging or to provide data connection through the connection port 6. In the embodiment shown, the connection port 6 is a USB socket.

Referring to Figure 2, the first sleeve 11a comprises a surface at the first end 3 of the apparatus 1 that is tapered. The tapered surface comprises a first angle α with respect to a surface of the second sleeve 11b at the second end 5. In this embodiment, the surface of the second sleeve 11b at the second end 5 is substantially parallel to the X-axis direction. Therefore, as shown, the consumable article 21 is insertable through the opening 20 (shown in Figure 1) at a proximal portion of the first end 3. Where the first sleeve 11a and second sleeve 11b meet at a join 11c, a second angle β with respect to the X-axis direction is formed. The second angle β is shown to be greater than the first angle α.

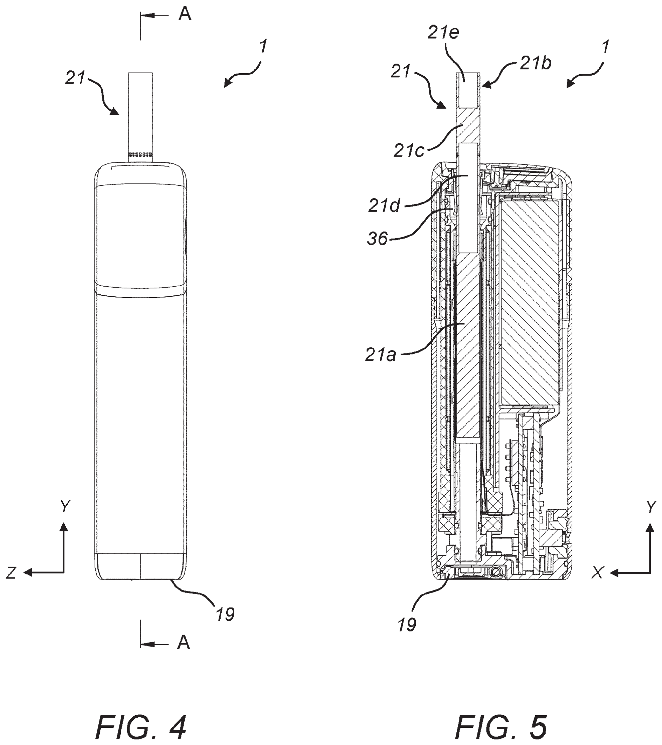

Figure 3 and Figure 4 respectively show a right-side and left-side of the apparatus 1. Here, the consumable article 21 is shown in a laterally central location. This is because the opening 20 through which the consumable article 21 is inserted is positioned at a mid-way point of the apparatus 1 along the Z-axis direction and is positioned off-centre in the X-axis direction.

Figure 5 and Figure 6 show schematic front cross-sectional views of the apparatus 1 with the consumable article inserted and withdrawn, respectively through line A-A of the apparatus 1, as shown in Figure 4.

As shown in Figure 6, the casing 9 has located or fixed therein a heater arrangement 23, control circuitry 25 and the power source 27. In this embodiment, the control circuitry 25 is part of an electronics compartment and comprises two printed circuit boards (PCBs) 25a, 25b. In this embodiment, the control circuitry 25 and the power source 27 are laterally adjacent to the heater arrangement 23 (that is, adjacent when viewed from an end), with the control circuitry 25 being located below the power source 27. Advantageously, this provides allows the apparatus 1 to be compact in a lateral direction, corresponding to the X-axis direction.

The control circuitry 25 in this embodiment includes a controller, such as a microprocessor arrangement, configured and arranged to control the heating of the aerosolisable material in the consumable article 21, as discussed further below.

The power source 27 in this embodiment is a rechargeable battery. In other embodiments, a non-rechargeable battery, a capacitor, a battery-capacitor hybrid, or a connection to a mains electricity supply may be used. Examples of suitable batteries include for example a lithium-ion battery, a nickel battery (such as a nickel-cadmium battery), an alkaline battery and/ or the like. The battery 27 is electrically coupled to the heater arrangement 23 to supply electrical power when required and under control of the control circuitry 25 to heat the aerosolisable material in the consumable (as discussed, to volatilise the aerosolisable material without causing the aerosolisable material to burn).

An advantage of locating the power source 27 laterally adjacent to the heater arrangement 23 is that a physically large power source 27 may be used without causing the apparatus 1, as a whole, to be unduly lengthy. As will be understood, in general, a physically large power source 27 has a higher capacity (that is, the total electrical energy that can be supplied, often measured in Amp-hours or the like) and thus the battery life for the apparatus 1 can be longer.

In one embodiment, the heater arrangement 23 is generally in the form of a hollow cylindrical tube, having a hollow interior heating chamber 29 into which the consumable article 21 comprising the aerosolisable material is inserted for heating, in use. Broadly speaking, the heating chamber 29 is a heating zone for receiving the consumable article 21. Different arrangements for the heater arrangement 23 are possible. In some embodiments, the heater arrangement 23 may comprise a single heating element or may be formed of plural heating elements aligned along the longitudinal axis of the heater arrangement 23. The or each heating element may be annular or tubular, or at least part-annular or part-tubular around its circumference. In an embodiment, the or each heating element may be a thin-film heater. In another embodiment, the or each heating element may be made of a ceramics material. Examples of suitable ceramics materials include alumina and aluminium nitride and silicon nitride ceramics, which may be laminated and sintered. Other heater arrangements are possible, including for example inductive heating, infrared heater elements, which heat by emitting infrared radiation, or resistive heating elements formed by for example a resistive electrical winding.

In this embodiment, the heater arrangement 23 is supported by a stainless steel support tube 75 and comprises a heater 71. In one embodiment, the heater 71 may comprise a substrate in which at least one electrically conductive element is formed. The substrate may be in the form of a sheet and may comprise for example a plastics layer. In a preferred embodiment the layer is a polyimide layer. The electrically conductive element/s may be printed or otherwise deposited in the substrate layer. The electrically conductive element/s may be encapsulated within or coated with the substrate.

The support tube 75 is a heating element that transfers heat to the consumable article 21. The support tube 75 comprises therefore heating material. In this embodiment, the heater material is stainless steel. In other embodiments, other metallic materials may be used as the heating material. For example, the heating material may comprise a metal or a metal alloy. The heating material may comprise one or more materials selected from the group consisting of: aluminium, gold, iron, nickel, cobalt, conductive carbon, graphite, steel, plain-carbon steel, mild steel, ferritic stainless steel, molybdenum, silicon carbide, copper and bronze.

The heater arrangement 23 is dimensioned so that substantially the whole of the aerosolisable material when the consumable article 21 is inserted in the apparatus 1 so that substantially the whole of the aerosolisable material is heated in use.

In some embodiments, the or each heating element may be arranged so that selected zones of the aerosolisable material can be independently heated, for example in turn (over time) or together (simultaneously) as desired.

The heater arrangement 23 in this embodiment is surrounded along at least part of its length by a vacuum region 31. The vacuum region 31 helps to reduce heat passing from the heater arrangement 23 to the exterior of the apparatus 1. This helps to keep down the power requirements for the heater arrangement 23 as it reduces heat losses generally. The vacuum region 31 also helps to keep the exterior of the apparatus 1 cool during operation of the heater arrangement 23. In some embodiments, the vacuum region 31 may be surrounded by a double-walled sleeve wherein the region between the two walls of the sleeve has been evacuated to provide a low-pressure region so as to minimise heat transfer by conduction and/or convection. In other embodiments, another insulating arrangement may be used, for example using heat insulating materials, including for example a suitable foam-type material, in addition to or instead of a vacuum region.

The casing 9, sometimes referred to as a housing, may further comprise various internal support structures 37 (best seen in Figure 6) for supporting all internal components, as well as the heater arrangement 23.

The apparatus 1 further comprises a collar 33 which extends around and projects from the opening 20 into the interior of the housing 9 and an expansion element 35 which is located between the collar 33 and one end of the vacuum region 31. The expansion element 35 is a funnel that forms an expansion chamber 40 at the mouth end 3 of the apparatus 1. The collar 33 is a retainer for retaining the consumable article 21 (as is best shown in Figure 5). In this embodiment, the retainer is reversibly removable from the apparatus 1.

One end of the expansion element 35 connects to and is supported by the first sleeve 11a and the other end of the expansion element 35 connects to and is support by one end of a cassette 51. A first sealing element 55, shown as an o-ring, is interposed between the expansion element 35 and the first sleeve 11a, and a second sealing element 57, also shown as an o-ring, is interposed between the expansion element 35 and the cassette 51. Each o-ring is made of silicone; however, other elastomeric materials may be used to provide the seal. The first and second sealing elements 55, 57 prevent the transmission of gas into surrounding components of the apparatus 1. Sealing elements are also provided at the distal end to prevent fluid ingress and egress at the distal end.

As best seen in Figure 6, the collar 33, the expansion element 35 and the vacuum region 31/heater arrangement 23 are arranged co-axially, so that, as best seen in Figure 5, when the consumable article 21 is inserted in the apparatus 1, the consumable article 21 extends through the collar 33 and the expansion element 35 into the heating chamber 29.

As mentioned above, in this embodiment, the heater arrangement 23 is generally in the form of a hollow cylindrical tube. The heating chamber 29 formed by this tube is in fluid communication with the opening 20 at the mouth end 3 of the apparatus 1 via the expansion chamber 40.

In this embodiment, the expansion element 35 comprises a tubular body that has a first open end adjacent the opening 20 and a second open end adjacent the heating chamber 29. The tubular body comprises a first section that extends from the first open end to approximately half away along the tubular body and a second section that extends from approximately half away along the tubular body to the second open end. The first section comprises a flared portion that widens away from the second section. The first section therefore has an internal diameter that tapers outwardly towards the opening first open end. The second section has a substantially constant internal diameter.

As best seen in Figure 6, in this embodiment, the expansion element 35 is located in the housing 9 between the collar 33 and the vacuum region 31/heater arrangement 23. More specifically, at the second open end, the expansion element 35 is interposed between an end portion of the support tube 75 of the heater arrangement 23 and an inside of the vacuum region 31 so that the second open end of the expansion element 35 engages with the support tube 75 and the inside of the vacuum region 31. At the first open end, the expansion element 35 receives the collar 33 so that legs 59 of the collar 33 project into the expansion chamber 40. Therefore, an inner diameter of the first section of the expansion element 35 is greater than an external diameter of the legs when the consumable article 21 is received in the apparatus 1 (see Figure 5) and when no consumable article 21 is present.

As is best appreciated from Figure 5, the inner diameter of the first section of the expansion element 35 is larger than the external diameter of the consumable article 21. There is therefore an air gap 36 between the expansion element 35 and the consumable article 21 when the consumable article 21 is inserted in the apparatus 1 over at least part of the length of the expansion element 35. The air gap 36 is around the entire circumference of the consumable article 21 in that region.

As best seen in Figure 6, the collar 33 comprises a plurality of legs 59. In this embodiment there are four legs 59, where only three are visible in the view of Figure 6. However, in other embodiments there may be more or fewer than four legs 59. The legs 59 are arranged circumferentially equally spaced around an inner surface of the collar 33 and exist in the expansion chamber 40 when the apparatus 1 is assembled. In this embodiment, when installed in the apparatus 1, the legs 59 are circumferentially equally spaced around the periphery of the opening 20. In one embodiment, there are four legs 59, in other embodiments there may be more or fewer than four legs 59. Each of the legs 59 extend in the Y-axis direction and parallel to the longitudinal axis of the expansion chamber 40 and project into the opening 20. The legs 59 also extend radially at a tip 59a of the leg 59 in a direction towards the expansion element 35 such that the tips 59a are angled away from each other. The tip 59a of each leg 59 provides for improved passage of the consumable article 21 so as to avoid damage to the consumable article 21 when inserting and/or removing the consumable article 21 from the apparatus 1. Together, the legs 59 provide a gripping section that grips the consumable article 21 in order to correctly position and retain the portion of the consumable article 21 that is within the expansion chamber 40 when the consumable article 21 is within the apparatus 1. Between them, the legs 59 gently compress or pinch the consumable article 21 in the region or regions of the consumable article that are contacted by the legs 59.

The legs 59 may be comprised of a resilient material (or be resilient in some other way) so that they deform slightly (for example compress) to better grip the consumable article 21 when the consumable article 21 is inserted in the apparatus 1 but then regain their original shape when the consumable article 21 is removed from the apparatus 1 since the legs 59 are biased to a rest position shown in Figure 6. Therefore, the legs 59 are reversibly movable from a first position, which is the rest position, to a second position, which is a deformed position shown in Figure 5, whereby the consumable article 21 is gripped. In this embodiment, the legs 59 are formed integrally with a main body of the collar 33. However, in some embodiments, the legs 59 may be separate components that are attached to the body of the collar 33. The inner diameter of the space formed between the legs 59 in the first, rest position, may be, for example, between 4.8mm and 5mm, and preferably 4.9mm. The legs 59 take up space within the opening 20 such that the open span of the opening 20 at the locations of the legs 59 is less than the open span of the opening 20 at the locations without the legs 59.

The expansion element 35 may be formed of for example a plastics material, including for example polyether ether ketone (PEEK). PEEK has a relatively high melting point compared to most other thermoplastics, and is highly resistant to thermal degradation.

Referring to Figure 6, in this embodiment, the heating chamber 29 communicates with a region 38 of reduced internal diameter towards the distal end 5. This region 38 defines a clean-out chamber 39 formed by a clean-out tube 41. The clean-out tube 41 is a hollow tube that provides an end stop for the consumable article 21 passed through the opening at the mouth end 3 (see Figure 5). The clean-out tube 41 is arranged to support and locate the heater arrangement 23.

The apparatus 1 may further comprise a door 61 at the distal end 5 of the apparatus 1 that opens and closes an opening in the bottom panel 19 to provide access to the heating chamber 29 so that the heating chamber 29 can be cleaned. The door 61 pivots about a hinge 63. This access through the door 61 particularly enables the user to clean within the heater arrangement 23 and the heating chamber 29 at the distal end 5. When the door 61 is open, a straight through-bore is provided through the whole apparatus 1 between the opening 20 at the mouth end 3 and an opening at one end of the clean-out chamber at the distal end 5 of the apparatus 1. The user is therefore easily able to clean through substantially the whole of the interior of the hollow heating chamber 29. For this, the user can access the heating chamber 29 via either end of the apparatus 1 at choice. The user may use one or more various cleaning devices for this purpose, including for example a classic pipe cleaner or a brush or the like.

As shown in Figure 6, the top panel structure 17 generally forms the first end 3 of the housing 9 of the apparatus 1. The top panel structure 17 supports the collar 33 which defines an insertion point in the form of the opening 20 through which the consumable article 21 is removably inserted into the apparatus 1 in use.

The collar 33 extends around and projects from the opening 20 into the interior of the housing 9. In this embodiment, the collar 33 is a distinct element from the top panel structure 17 and is attached to the top panel structure 17 through an attachment, such as a bayonet locking mechanism. In other embodiments, an adhesive or screws may be used to couple the collar 33 to the top panel structure 17. In other embodiments, the collar 33 may be integral with the top panel structure 17 of the housing 9 so the collar 33 and the top panel structure 17 form a single piece.

As best appreciated from Figures 5 and 6, open spaces defined by adjacent pairs of legs 59 of the collar 33 and the consumable article 21 form ventilation paths 20a around the exterior of the consumable article 21. These ventilation paths 20a, allow hot vapours that have escaped from the consumable article 21 to exit the apparatus 1 and allow cooling air to flow into the apparatus 1 around the consumable article 21. In this embodiment, four ventilation paths are located around the periphery of the consumable article 21, which provide ventilation for the apparatus 1. In other embodiments, more or fewer such ventilation paths 20a may be provided.

Referring again particularly to Figure 5, in this embodiment, the consumable article 21 is in the form of a cylindrical rod which has or contains aerosolisable material 21a at a rear end in a section of the consumable article 21 that is within the heater arrangement 23 when the consumable article 21 is inserted in the apparatus 1. A front end of the consumable article 21 extends from the apparatus 1 and acts as the mouthpiece 21b which is an assembly that includes one or more of a filter for filtering aerosol and/or a cooling element 21c for cooling aerosol. The filter/cooling element 21c is spaced from the aerosolisable material 21a by a space 21d and is also spaced from a tip of mouthpiece assembly 21b by a further space 21e. The consumable article 21 is circumferentially wrapped in an outer layer (not shown). In this embodiment, the outer layer of the consumable article 21 is permeable to allow some heated volatilised components from the aerosolisable material 21a to escape the consumable article 21.

In operation, the heater arrangement 23 will heat the consumable article 21 to volatilise at least one component of the aerosolisable material 21a.

The primary flow path for the heated volatilised components from the aerosolisable material 21a is axially through the consumable article 21, through the space 21d, the filter/cooling element 21c and the further space 21e before entering a user's mouth through the open end of the mouthpiece assembly 21b. However, some of the volatilised components may escape from the consumable article 21 through its permeable outer wrapper and into the space 36 surrounding the consumable article 21 in the expansion chamber 40.

It would be undesirable for the volatilised components that flow from the consumable article 21 into the expansion chamber 40 to be inhaled by the user, because these components would not pass through the filter/cooling element 21c and would thus be unfiltered and not cooled.

Advantageously, the volume of air surrounding the consumable article 21 in the expansion chamber 40 causes at least some of the volatilised components that escape the consumable article 21 through its outer layer to cool and condense on the interior wall of the expansion chamber 40 preventing those volatilised components from being possibly inhaled by a user.

This cooling effect may be assisted by cool air that is able to enter from outside the apparatus 1 into the space 36 surrounding the consumable article 21 in the expansion chamber 40 via the ventilation paths 20a, which allows fluid to flow into and out of the apparatus. A first ventilation path is defined between a pair of the plurality of neighbouring legs 59 of the collar 33 to provide ventilation around the outside of the consumable article 21 at the insertion point. A second ventilation path is provided between a second pair of neighbouring legs 59 for at least one heated volatilised component to flow from the consumable article 21 at a second location. Therefore, ventilation is provided around the outside of the consumable article 21 at the insertion point by the first and second ventilation paths. Furthermore, heated volatilised components that escape the consumable article 21 through its outer wrapper do not condense on the internal wall of the expansion chamber 40 and are able to flow safely out of the apparatus 1 via the ventilation paths 20a without being inhaled by a user. The expansion chamber 40 and the ventilation both aid in reducing the temperature and the content of water vapour composition released in heated volatilised components from the aerosolisable material.

The apparatus 1 is fitted with a thermal liner 13 towards the first end 3 of the apparatus 1. As shown in Figure 6, the liner 13 is coupled with the first sleeve 11a. The thermal liner 13 is a heat diffuser that helps to manage heat distribution and helps to protect the first sleeve 11a from thermal stress by distributing internal heat generated by use of the apparatus 1 over a larger area. The thermal liner 13 is made from a metallic material such as aluminium in order to be lightweight and sufficiently spread heat around the proximal end 3. This helps to avoid localised hot spots and increases the longevity of the first sleeve 11a. The liner 13 distributes heat by conduction. The liner 13 is not configured to insulate heat or reflect heat by radiation.

As shown in Figure 6, the support tube 75 is externally wrapped by a heater 71. In an example, the heater 71 is a thin-film heater comprising polyimide and electrically conductive elements. The heater 71 may comprise a plurality of heating regions that are independently controlled and/or simultaneously controlled. In this example, the heater 71 is formed as a single heater. However, in other embodiments, the heater 71 may be formed of a plurality of heaters aligned along the longitudinal axis of the heating chamber 29. In some embodiments, a plurality of temperature sensors may be used to detect the temperature of the heater 71 and/or support tube. The support tube 75 in this embodiment is made from stainless steel to conduct heat from the heater 71 towards the consumable article 21 when the consumable article 21 is inserted in a heating zone (the heating zone is defined by the thermal conduction region of the support tube 75). In other embodiments, the support tube 75 may be made from a different material, as long as the support tube 75 is thermally conductive. Other heating elements 75 may be used in other embodiments. For example, the heating element may be a susceptor that is heatable by induction. In this embodiment, the support tube 75 acts as an elongate support for supporting, in use, the article 21 comprising aerosolisable material.

In this embodiment, the heater 71 is located externally of the support tube 75. However, in other embodiments, the heater 71 may be located internally of the support tube 75. The heater 71 in this embodiment comprises a portion that passes outside of the support tube 75 and is referred to herein as a heater tail 73. The heater tail 73 extends beyond the heating chamber 29 and is configured for electrical connection to the control circuitry 25. In the embodiment shown, the heater tail 73 physically connects to one PCB 25a. An electrical current may be provided by the power source 27 to the heater 71 via the control circuitry 25 and the heater tail 73.

As a connection between the heating chamber 29 and the control circuitry 25 is required, it can be difficult to prevent airflow (or the flow of any other fluids) between the heating chamber 29 and the electronics compartment. In this embodiment, a gasket 15 is used to prevent such fluid flow, as shown in Figure 6. The gasket 15 comprises a first seal 15a and a second seal 15b. The gasket 15 surrounds the heater tail 73 and is clamped together by a base 53 and the cassette 51. In the embodiment shown, four fastening members 43 are used to provide the enough force to clamp the base 53 and cassette 51 together and seal off access to and from the chamber 29 at this point. The fastening members 43 are screws that are tightened to a predetermined torque. In other embodiments, different fastening members 43 may be used such as bolts.

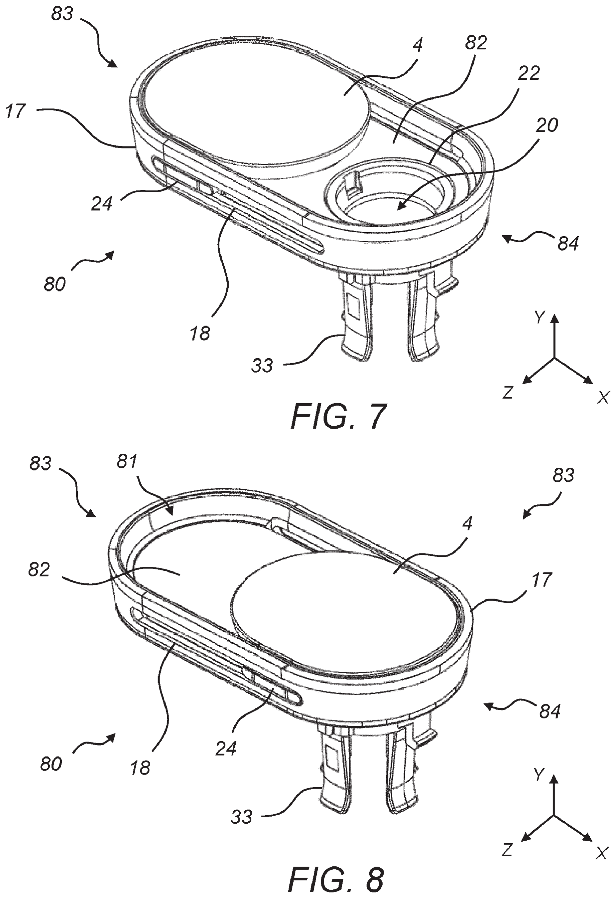

Referring to Figure 7 to Figure 9, an example door assembly 80 for use with the apparatus 1 is shown. The assembly 80 comprises the top panel structure 17 of the apparatus 1, and the door 4. The top panel structure 17 delimits an aperture 22 for receiving the collar 33, which together form at least a part of the opening 20 through which the consumable article 21 may be removably inserted into the apparatus 1. The door 4 is movable between a first, open position, where access to the opening 20 is unrestricted as shown in Figure 7, and a second, closed position, where access to the opening 20 is fully restricted as shown in Figure 8. In the open position, the door 4 is at a first end 83 of the top panel structure 17. In the closed position, the door 4 is at a second end 84 of the top panel structure 17. The aperture 22 is located at the second end 84 of the top panel structure 17. In this embodiment, the opening 20 is completely covered when the door 4 is in the closed position. In other embodiments, the opening 20 may only be partially covered by the door 4 in the closed position.

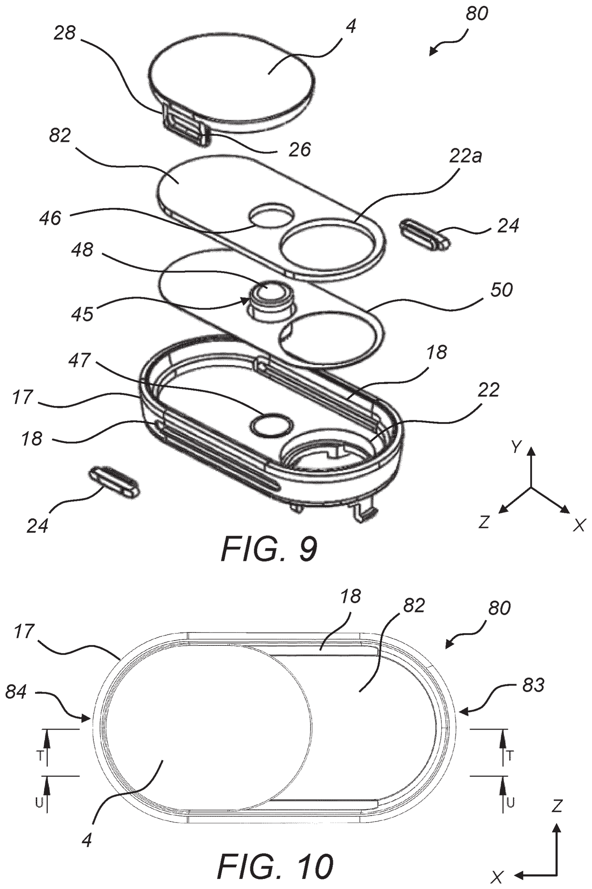

The top panel structure 17 comprises a recessed portion 81 configured to house the door 4, and to permit movement of the door 4 between the open and closed positions. The recessed portion 81 can protect the door 4 from being damaged. In this embodiment, the top panel structure 17 is further configured to house a panel 82 which defines an upper surface of the top panel structure 17. The panel 82, as best seen in Figure 9, defines an aperture 22a which forms at least a part of the opening 20. In some embodiments, the panel 82 may provide a low-resistance surface along which the door 4 can slide. In this way, the door 4 may be less likely to scratch the panel 82 in use. The shape of the panel 82 corresponds to the shape of the recessed portion 81, and the panel 82 is secured to the top panel structure 17 by a layer of adhesive 50. In other examples, the shape of the panel 82 may not correspond to the shape of the recessed portion 81, and/or the adhesive layer 50 may not exist and the panel 82 may be secured to the top panel structure by any other appropriate means. In other embodiments, the top panel structure 17 may not be configured to house the panel 82, and the panel 82 may not exist. In such an embodiment, the recessed portion 81 defines an upper surface of the top panel structure 17 along or above which the door 4 may slide. The door 4 is substantially elongate in its direction of motion. A surface of the door facing the top panel 82, or the recessed portion 81, is substantially flat. In other examples, the door 4 may not be elongate, and the surface facing the panel 82 or the recessed portion 81 may not be flat.

A plurality of ridges project from the perimeter of the aperture 22 into the apparatus 1 from the underside of the top panel structure 17. In this embodiment, the ridges form part of a bayonet mechanism for removably retaining the collar 33 in the aperture 22. In some embodiments, the ridges may further serve to help retain the top panel structure 17 to the first sleeve 11a. In some examples, the top panel structure 17 may be removably secured to the first sleeve 11a and/or another part of the apparatus 1 using an appropriate retaining means, such as using clips. In other examples, the top panel structure 17 may be secured to the apparatus 1 by any other appropriate means, such as using adhesive or screws. In some examples, the top panel structure 17 may not be removable. The apparatus 1 may comprise a gasket (not shown) to provide a seal between the top panel structure 17 and an interior of the apparatus 1.

In the present embodiment, the door 4 is supported above the panel 82 within the recessed portion 81 by way of a guide formed at least in part by a male portion 24 connected to the door 4 and a female portion 18 in the structure. The guide is for guiding a movement of the door relative to the structure. Thereby, the male portion 24 moves with the door 4 along and within the female portion 18. The female portion 18 may define boundaries within which the movement of the door is limited. In the present embodiment, the male portion 24 is initially provided as a separate part to the door 4 and is inserted through the female portion 18 to connect to the door 4. In this way, the male portion 24 may be removed to conveniently remove the door 4 without risking damage to the door 4. The male portion 24 interfaces with, and is retained in, an opening 26 on a tab 28 protruding from the door 4. In other examples, the male portion 24 may be connected to door 4 in other ways, such as by mating a male connector protruding from the door 4 with a female connector in the male portion 24. Alternatively, the male portion 24 may not be a separate part, and may instead be formed by a tab, catch or other protrusion on the door 4. The male portion 24 and/or the female portion 18 may comprise low-resistance surfaces to enable the door 4 to slide smoothly within the top panel structure 17, and to reduce a risk of the door catching or otherwise causing damage during operation. In other examples, movement of the door 4 relative to the top panel structure 17 may be guided in other ways, such as by providing a female member in the door 4 and a corresponding male track in the top panel structure 17. In other examples, the door 4 may not be supported above the panel 82 and may instead slide or roll along the panel 82 or the recessed portion 81.

Figure 9 further shows a spring plunger 45 of a mechanical latching arrangement which will be described in detail hereinafter in relation to Figures 10 to 12. The spring plunger 45 is disposed in the top panel structure 17 and protrudes through an aperture 46 in the panel 82. The spring plunger 45 is disposed in the top panel structure 17 through an opening or recess 47 in the top panel structure 17, but in other examples it may be disposed or fixed to the structure in any other way. In the present embodiment comprising a mechanical latching arrangement, a surface of the door 4 adjacent to the panel 82 defines a linear cam element 42 for interfacing with the spring plunger 45 in a linear cam arrangement in order to latch, retain or hold the door 4 in the open position when the door 4 is in the open position, and to latch, retain or hold the door 4 in the closed position when the door 4 is in the closed position. The linear cam element 42 may be formed from the body of the door 4 or may be a separate element disposed in or on the door 4. The spring plunger comprises a depressible member 48 defining a follower of the linear cam arrangement. Thereby, the mechanical latching arrangement comprises a first part disposed in the top panel structure 17 in the form of the spring plunger 45 or the depressible member 48, and a second part defined by, or disposed in or on the door 4 in the form of the linear cam element. The first part is configured to interact with the second part by way of reciprocal action as the door 4 is moved between the open and the closed position by the application of external force. In other words, there is some interplay between the first part of the latching arrangement in the top panel structure 17, and the second part of the latching arrangement in the door 4, wherein the first and second parts cooperate to latch, retain or hold the door 4 in the open and/or the closed position.

In the present example, a depressible member 48 in the spring plunger 45 defines a follower of the linear cam arrangement. In other examples, there may be no spring plunger 45, and the follower may instead be defined by a different component, such as a flexible element, a ball or a sprung roller. In other examples, the door may be rotated, translated, or a combination of both to move the door between the open and closed positions. In this case, the cam arrangement may be some other form of cam arrangement, such as a face cam. In other examples, the door may be held in the open or the closed position by other retaining means. There may be more than one cam arrangement. For example, there may be more than one follower and/or more than one cam element.

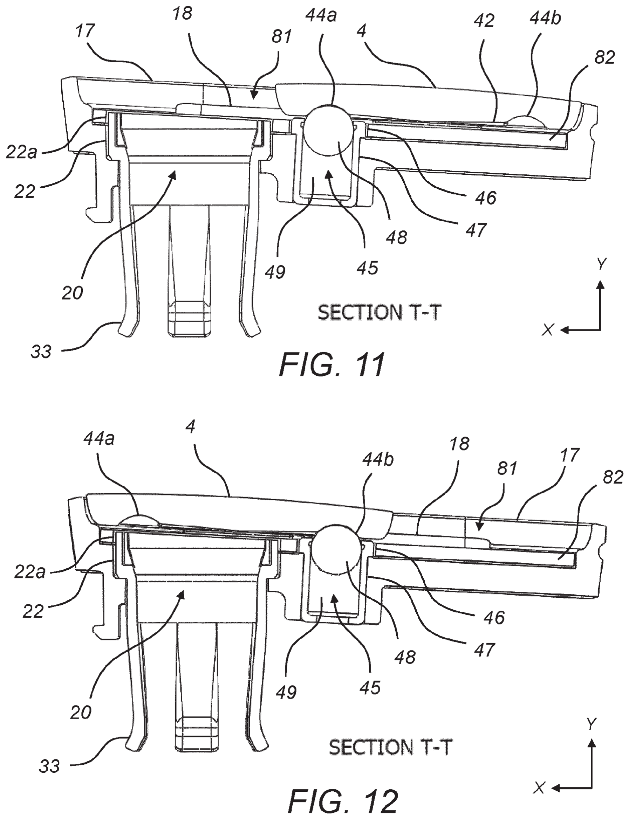

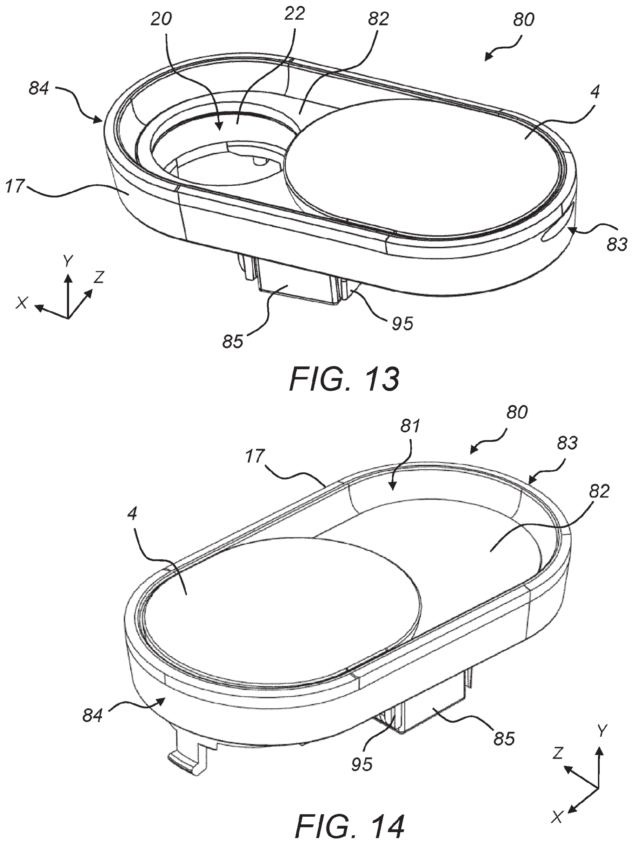

A plan view of the assembly 80 with the door 4 in the closed position is shown in Figure 10. In an alternative embodiment, the assembly 80 of Figure 10 may instead comprise a magnetic latching arrangement, as discussed hereinafter with reference to Figures 13 to 22. The guide in Figure 10 comprises female member 18; however, in other examples this may not be the case, and the assembly 80 may comprise any other guide. A cross-section T-T of the assembly 80, wherein the assembly 80 comprises the mechanical latching arrangement, is shown in Figures 11 and 12. The depressible member 48 of the spring plunger is movably retained in a housing 49 and is biased towards the linear cam element 42. The depressible member 48 is thereby urged against the linear cam element 42 in use. The spring plunger 45 may comprise a biasing element (not shown), such as a spring, for example a coil spring, or any other appropriate flexible member or sprung material disposed in the housing 49 to bias the depressible member 48 towards the linear cam element 42. In some examples, there may be no separate biasing element, and the depressible member 48 may be a flexible member, for instance comprising a resilient material. In this way, the depressible member 48 may deform in use. The depressible member 48 may be made from metal, plastic, rubber, or any other suitable material. In other examples, there may be no housing 49 and the depressible member 48 may otherwise be disposed in or on the top panel structure 17. For instance, the depressible member 48 may be disposed in a recess or cavity in the top-panel structure 17.

The linear cam element 42 of the door 4 comprises two flat surfaces, each sloping in different directions relative to a plane of motion of the door 4. The flat surfaces each comprise a detent 44a, 44b configured to engage with the depressible member 48 when the door 4 is in the open or the closed position to hold the door 4 in the respective open or closed position until an external force is applied, in use, to release the latching arrangement. Figure 11 shows the door 4 in the open position, in which the depressible member 48 is biased towards the linear cam element 42 such that the depressible member 48 is engaged with the detent 44a. Figure 12 shows the door 4 in the closed position, in which the depressible member 48 is biased towards the linear cam element 42 such that the depressible member 48 is engaged with the detent 44b. Thereby, in each of Figures 11 and 12, the door 4 is held in place by the linear cam arrangement.

When the door 4 is moved from the open or the closed position by the application of an external force, and as such is located between the open and the closed positions, the depressible member 48 is depressed by a respective one of the sloping, flat surfaces of the linear cam element. For instance, if the door 4 is moved from right to left in Figure 11, such that the door is moved from the open position towards the closed position, the depressible member 48 will be depressed by the sloping, flat surface which is shown on the left-most side of the door. Since the surface is sloping, the surface is not oriented perpendicularly to a direction of force applied by the biasing element of the spring plunger 45. Therefore, a resultant force applied to the linear cam element 42 by the biased depressible member 48 will have a component of force in the direction of motion of the door 4. In this way, the door 4 will be biased towards the open position when the door 4 is between the open position and an intermediate position that is between the open and the closed positions. In a similar way, the door 4 will be biased towards the closed position when the door 4 is between the closed position and the intermediate position.

When the door 4 is in the intermediate position (not shown), the point at which the two sloping surfaces of the linear cam element 42 meet will be incident with the depressible member 48, and the door 4 will be in an unstable equilibrium. In this position, the door 4 is unbiased, and the resultant force on the door 4 will be perpendicular to the direction of motion of the door 4. If the door 4 is perturbed slightly towards the open position from the intermediate position, the door 4 will be biased towards the open position. If the door 4 is perturbed slightly towards the closed position from the intermediate position, the door 4 will be biased towards the closed position. In other examples, the linear cam element 42 may comprise one or more flat surfaces in the same orientation. The one or more flat surfaces may, in some examples, be parallel to a plane of motion, such that no biasing force is exerted on the door 4. In other examples, the one or more flat surfaces may be angled in the same direction relative to the plane of motion such that the door 4 is biased in a single direction only, such as towards the closed position or towards the open position.

In the present example, the depressible member 48 is spherical. The depressible member rolls relative to the linear cam element 42 in use to facilitate a smooth movement of the door 4. In other examples, the depressible member 48 may be any other suitable shape, such as cylindrical. In other examples, the depressible member 48 may not roll, and the linear cam element 42 may instead slide along the depressible member 48. In the present example, the detents 44a, 44b have a shape corresponding to that of the depressible member 48 to facilitate a reliable retention of the door 4. However, in other examples this may not be the case, and the detent may be any other suitable shape. The spring plunger 45 of the present example is located in a centre of the top panel structure 17 corresponding to the intermediate position and the detents 44a, 44b are located at opposing ends of the door 4 in the direction of motion. In other examples, the spring plunger 45 may be offset from a centre of the structure, and/or there may be more than one spring plunger 45 or follower. The detents 44a, 44b may be located at opposing sides of the door 4 in a dimension perpendicular to the direction of motion. There may be more than two detents 44a, 44b or only one detent 44a, 44b in the linear cam element 42. For example, there may be two spring plungers 45 in the top panel structure 17 and one detent 44a, 44b in the linear cam element 42. Alternatively, the one or more spring plungers 45 may be located in the door 4 and the linear cam element may be disposed in or on the top panel structure 17.

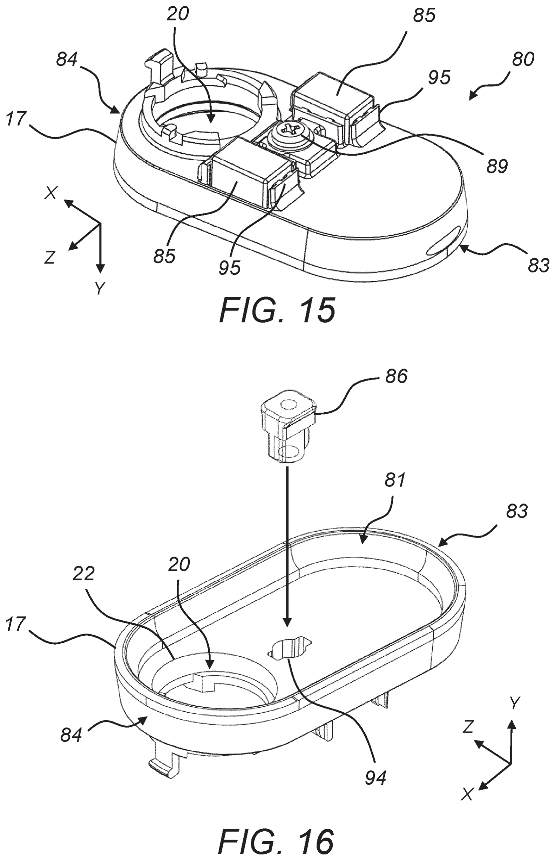

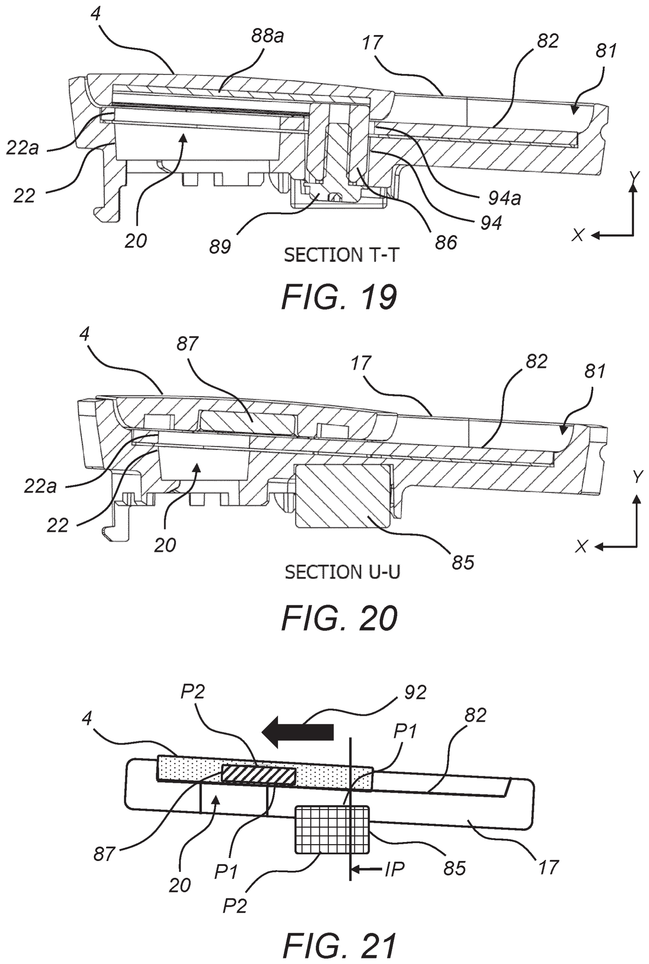

A further embodiment of the invention comprising a magnetic latching arrangement is now described hereinafter with reference to Figures 13 to 22. As shown in Figure 13 to Figure 15, the top panel structure 17 of the assembly 80 further comprises a pair of magnets 85. The magnets 85 are located beneath the upper surface of the top panel structure 17, as best seen in Figure 15, so as to be concealed within the apparatus 1 in use. In this embodiment, the magnets 85 are retained by ridges 95 on the underside of the top panel structure 17. In other embodiments, the magnets 85 may be housed in containers or recesses and/or adhered to the underside of the top panel structure 17. In other embodiments there may be one or a plurality of magnets 85. The magnets 85 are stationary relative to the top panel structure 17 in use and interact with a corresponding pair of magnets 87 (shown in Figure 20) disposed within the door 4 to form the magnetic latching arrangement. The door magnets 87 are obscured from view in Figure 13 to Figure 15 The 'stationary' magnets 85 are substantially cuboidal, and the centroid of each stationary magnet 85 is equidistant in the direction of motion from the ends of the structure 17 defined by the recess 81. In some embodiments, the stationary magnets 85 may be any shape other than cuboidal, such as cylindrical. In some embodiments, the centroid of the magnets 85 may not be equidistant in the direction motion from the ends of the structure 17 defined by the recess 81.

The magnetic latching arrangement of this embodiment is configured to magnetically hold the door 4 in at least one of the open position or the closed position upon movement of the door 4 to the first end 83 or the second end 84, respectively. In some embodiments, the magnetic latching arrangement may be configured to magnetically hold the door 4 in the open position when the door 4 is moved to the first end 83, and the closed position when the door 4 is moved to the second end 84. The holding prevents the door 4 from being inadvertently opened or closed, for instance during transport. A user can be confident that, if the door 4 is in the open or the closed position, it should remain in the open or the closed position until moved manually by the user. The magnetic latching arrangement is described in further detail hereinafter in relation to Figure 20 to Figure 22

Figure 16 shows the top panel structure 17 with the door 4, the panel 82, which may be a protective layer, and the stationary magnets 85 removed. In one embodiment, the door 4 is coupled with, and slidable relative to the top panel structure 17 by way of a track formed at least in part by a male member 86. The male member 86 is fixed to the top panel structure 17 using a screw 89. In a preferred embodiment, the male member passes through an opening 94 in the top panel structure 17 (and through a corresponding opening 94a in the panel 82), and is retained by a screw 89 which engages with an internal thread of the male member 86 and abuts a lower face of the top panel structure 17. The screw 89 is visible on the underside of the top panel structure 17 in Figure 15. In this embodiment, the male member 86 is located substantially to a centre of the upper surface of the top panel structure 17. In other embodiments the male member 86 may be offset from the centre of the upper surface. The top of the male member 86 comprises a ridge so shaped as to engage with a corresponding female member 88a on an underside of the door 4 to form the track, which acts as a guide to guide movement of the door 4.

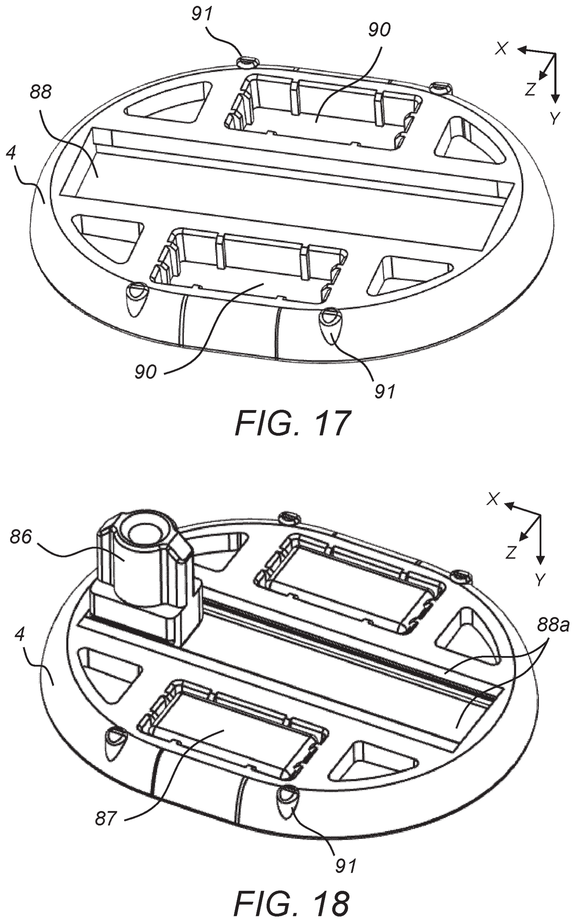

Figure 17 and Figure 18 show an underside of the door 4. The underside of the door 4 comprises a plurality of recesses 88, 90. An elongate central recess 88 comprises a female member 88a which is configured and so shaped as to engage with the male member 86 to form the track. In this embodiment, the male member 86 comprises a ridge which mates with the female member 88a to restrict movement of the door 4 in the Y-direction. In other embodiments, the same effect may be achieved by providing a recess in the male member 86 and a correspondingly-shaped protrusion or ridge in the female member 88a or on the door 4. In some embodiments, the female member 88a may be an overmoulded part such that the female member 88a is retained within the elongated recess 88 in the door 4 without requiring adhesive or other retaining means. In other embodiments, the female member 88a may not exist and the male member 86 may engage directly with the recess 88, the recess being so shaped to facilitate such engagement.

Figure 18 shows the male member 86 engaged with the door 4 via the female member 88a. The male member 86 is movable along the female member 88a in the X-direction, thereby permitting relative movement of the door 4 and the top panel structure 17 in the X-direction. In some embodiments, the female member 88a may be in the top panel structure 17 and the male member 86 may be in the door 4. In some embodiments, there may be more than one male member 86 and more than one female member 88a. In some embodiments, the track may be formed by engaging one or more protrusions on the door 4 with one or more corresponding recesses in the top panel structure 17, or vice-versa. In this embodiment, the door 4 conceals the track in use, ensuring that the male member 86 is protected from damage and does not catch or snag on external objects.

The cover further comprises two recesses 90 for housing the two door magnets 87. The door magnets 87 are configured to interact with the stationary magnets 85 in a magnetic latching arrangement as noted hereinbefore. The door magnets 87 are substantially cuboidal, and the centroid of each door magnet 87 is equidistant in the direction of motion from the ends of the door 4. In some embodiments, the door magnets 87 may be any shape other than cuboidal, such as cylindrical. In some embodiments, the centroid of the door magnets 87 may not be equidistant in the direction motion from the ends of the cover 4.

The door 4 in Figure 17 and Figure 18further comprises four protrusions 91 for supporting the door 4 on the upper surface of the top panel structure 17. In some embodiments the tips of the protrusions 91 may have a low frictional resistance such that the door 4 does not scratch the upper surface of the top panel structure 17 in use.

Figure 19 shows a cross-section T-T of Figure 10 when the assembly 80 comprises the magnetic latching arrangement, and Figure 20 shows a cross-section U-U of Figure 10 wherein the assembly 80 comprises the magnetic latching arrangement. The assembly 80 of Figures 19 and 20 does not comprise the female part 18 of the guide shown in Figure 10. Instead, the assembly 80 of Figures 19 and 20 comprises the male member 86 engaged with the female member 88a for guiding the door 4 as described above. In this embodiment, the male member 86 passes through the opening 94 top panel structure 17 (and opening 94a in the panel 82). The male member 86 may then be fixed to the top panel structure 17 by way of screw 89. The male member 86 extends into the elongated recess in the door 4. In this embodiment, the male member 86 abuts a first end of the door 4 to hold the door 4 in the closed position against a magnetic force produced by the magnetic latching arrangement. The male member abuts a second end of the door 4, opposite the first end, to hold the cover in the open position against a magnetic force produced by the magnetic latching arrangement.

The magnetic latching arrangement is now described with reference to Figure 20 to Figure 22. Figure 20 shows a stationary magnet 85 disposed within the top panel structure 17, and a door magnet 87 disposed within the door 4. Figure 21 shows a schematic side view of Figure 20, illustrating the door 4, the door magnet 87, the top panel structure 17, the stationary magnet 85, the upper surface 82 and the opening 20. In a preferred embodiment, the stationary magnet 85 and the door magnet 87 are each polarised substantially vertically. That is, each magnet has a first magnetic pole P1 and a second magnetic pole P2, wherein each magnetic pole is facing substantially vertically, as shown in Figure 21. The first magnetic pole P1 has an opposite polarity to the second magnetic pole P2. The first magnetic pole P1 of the door magnet 87 is facing the first magnetic pole P1 of the stationary magnet 85. In this way, when the door 4 is in the closed position, as illustrated in Figure 21, a force 92 arising from a repulsion between the opposing like poles P1 holds the door 4 in the closed position. Similarly, when the door 4 is in the open position, a force 93 arising from a repulsion between the opposing like poles P1 holds the door 4 in the open position.

In other embodiments, the stationary magnet 85 and the door magnet 87 may be polarised in a direction substantially parallel to the direction of motion. That is, the first magnetic pole P1 and the second magnetic pole P2 face substantially horizontally. The magnets are disposed such that: when the door 4 is in the closed position, the first magnetic pole P1 of the door magnet 87 is facing the first magnetic pole P1 of the stationary magnet 85; and when the door 4 is in the open position, the second magnetic pole P2 of the door magnet 87 is facing the second magnetic pole of the stationary magnet 85. In this way, the door 4 may be held in the open position or the closed position by a magnetic force 92 or 93 arising from a repulsion between the opposing like poles in each position, respectively.

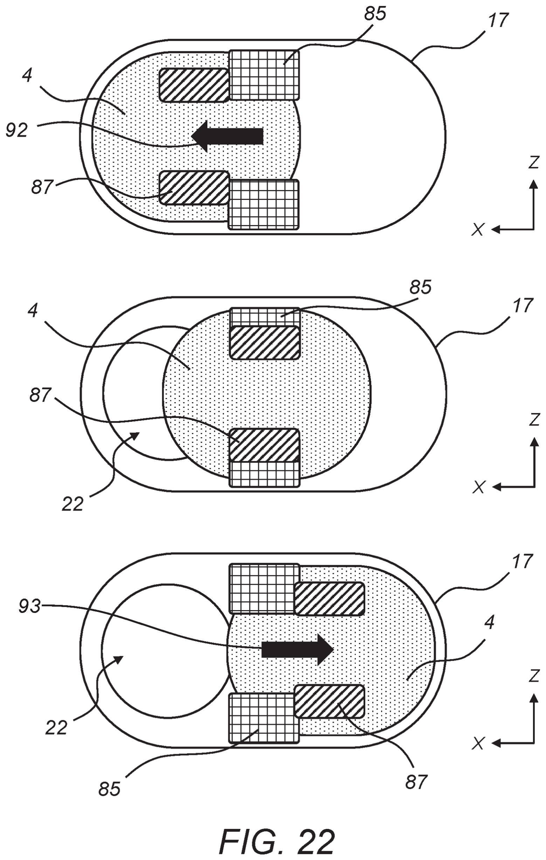

Figure 22 illustrates a top-down schematic of a preferred magnetic latching arrangement. Visible in Figure 22 is the door 4, the pair of door magnets 87, the top panel structure 17 and the pair of stationary magnets 85. The door 4 starts in the closed position, wherein a force 92 arising from a repulsion between opposing like poles, as described hereinbefore, holds the door 4 in the closed position. In this embodiment, the magnetic latching arrangement: biases the door 4 towards the closed position when the door 4 is between the closed position and an intermediate position IP (illustrated in Figure 21); and biases the door 4 towards the open position when the door 4 is between the open position and the intermediate position IP. When the door 4 is in the intermediate position IP, there is no resulting force in the sliding direction and the door 4 is unbiased. In some embodiments, the intermediate position IP is in the centre of the top panel structure 17, such that the magnets 85 are aligned with the magnets 87 when the door 4 is in the intermediate position IP. In a preferred embodiment, the intermediate position IP is off-centre such that the magnets 85 are not aligned with the magnets 87, as shown in Figure 21.

Returning to Figure 22, a user experiences a resistance due to the magnetic force 92 when moving the door 4 from the open position to the intermediate position IP. If the door 4 is moved past the intermediate position IP towards the open position, the user will no longer experience a resistance as the door 4 would be biased towards the open position by the magnetic force 93. If the user instead moved the door 4 from the closed position to the intermediate IP position but released the door 4 before reaching the intermediate IP position, the magnetic force 92 would bias the door 4 back towards the closed position. The same effects would occur when moving the door 4 from the open position to the intermediate IP and/or the closed position. The magnetic latching arrangement thereby helps to prevent the door 4 from being inadvertently opened or closed, for example during transport.

In each of the embodiments described hereinbefore in relation to the magnetic arrangement, the biasing force results from a repulsion between like poles of the stationary magnets 85 and corresponding door magnets 87. In an alternative embodiment not shown here, the biasing force results from an attraction between opposing poles of the stationary magnets 85 and corresponding door magnets 87. In such an embodiment, there may be one or more stationary magnets 85 disposed at the first end 83 of the top panel structure 17 and one or more stationary magnets 85 disposed at the second end 84 of the top panel structure 17. The poles of the first end 83 and second end 84 stationary magnets 86 may be configured to produce an attractive force through interaction with corresponding opposite poles of one or more door magnets 87 disposed at a central location in the door 4. The attractive force biases the door 4 in the open position or the closed position, as described hereinbefore.

In another alternative embodiment, the first end 83 stationary magnets 86 interact with one or more door magnets 87 disposed at a first end 83 of the door 4, and the second end 84 stationary magnets 86 interact with one or more door magnets 87 disposed at a second end 84 of the door 4. In such an embodiment the first end 83 stationary magnets 86 are configured to attract the first end 83 door magnets 87, and the second end 84 stationary magnets 86 are configured to attract the second end 84 door magnets 87 in order to bias the door 4 in the open position and the closed position, respectively, as described hereinbefore.

In this embodiment, the material of the door 4 and the top panel structure 17 is Polycarbonate/Acrylonitrile Butadiene Styrene (PC/ABS). In other embodiments, the material of the door 4 and/or the top panel structure 17 may be other than PC/ABS, such as glass-filled nylon. In some embodiments, the door 4 is preferably between 14 mm and 15 mm in length in a direction parallel to the sliding direction, preferably between 11 mm and 12 mm in length perpendicular to the sliding direction, and preferably between 1 mm and 2 mm thick.

In some embodiments, the aerosolisable material comprises tobacco. However, in other embodiments, the aerosolisable material may consist of tobacco, may consist substantially entirely of tobacco, may comprise tobacco and aerosolisable material other than tobacco, may comprise aerosolisable material other than tobacco, or may be free from tobacco. In some embodiments, the aerosolisable material may comprise a vapour or aerosol forming agent or a humectant, such as glycerol, propylene glycol, triacetin, or diethylene glycol.

In some embodiments, the aerosolisable material is non-liquid aerosolisable material, and the apparatus is for heating non-liquid aerosolisable material to volatilise at least one component of the aerosolisable material.

Once all, or substantially all, of the volatilisable component(s) of the aerosolisable material in the consumable article 21 has/have been spent, the user may remove the article 21 from the apparatus 1 and dispose of the article 21. The user may subsequently re-use the apparatus 1 with another of the articles 21. However, in other respective embodiments, the article may be non-consumable, and the apparatus and the article may be disposed of together once the volatilisable component(s) of the aerosolisable material has/have been spent.

In embodiments described herein the consumable article 21 comprises a mouthpiece assembly 21b. However, it will be appreciated that in other embodiments an example apparatus as described herein may comprise a mouthpiece. For example, the apparatus 1 may comprise a mouthpiece which is integral with the apparatus, or in other embodiments the apparatus may comprise a mouthpiece which is detachably attached to the apparatus 1. In an example, the apparatus 1 may be configured to receive aerosolisable material to be heated. The aerosolisable material may be contained in a consumable article not comprising a mouthpiece portion. A user may draw on the mouthpiece of the apparatus 1 to inhale aerosol generated by the apparatus by heating the aerosolisable material.

In some embodiments, the article 21 is sold, supplied or otherwise provided separately from the apparatus 1 with which the article 21 is usable. However, in some embodiments, the apparatus 1 and one or more of the articles 21 may be provided together as a system, such as a kit or an assembly, possibly with additional components, such as cleaning utensils.

In order to address various issues and advance the art, the entirety of this disclosure shows by way of illustration and example various embodiments in which the claimed invention may be practised and which provide for superior heating elements for use with apparatus for heating aerosolisable material, methods of forming a heating element for use with apparatus for heating aerosolisable material to volatilise at least one component of the aerosolisable material, and systems comprising apparatus for heating aerosolisable material to volatilise at least one component of the aerosolisable material and a heating element heatable by such apparatus. The advantages and features of the disclosure are of a representative sample of embodiments only, and are not exhaustive and/or exclusive. They are presented only to assist in understanding and teach the claimed and otherwise disclosed features. It is to be understood that advantages, embodiments, examples, functions, features, structures and/or other aspects of the disclosure are not to be considered limitations on the disclosure as defined by the claims or limitations on equivalents to the claims, and that other embodiments may be utilised and modifications may be made without departing from the scope and/or spirit of the disclosure. Various embodiments may suitably comprise, consist of, or consist in essence of, various combinations of the disclosed elements, components, features, parts, steps, means, etc. The disclosure may include other inventions not presently claimed, but which may be claimed in future.
The following clauses recite features of the invention that may or may not presently be claimed, and which may serve as basis for amendment(s) and/or one or more divisional applications:
1. An assembly for use in an apparatus for heating aerosolisable material to volatalise at least one component of the aerosolisable material to generate an inhalable aerosol, the assembly comprising:
   a structure delimiting an opening through which aerosolisable material can be removably inserted into the apparatus;
   a door coupled to the structure and movable between an open position where access to the opening is unrestricted, and a closed position where access to the opening is restricted; and
   a latching arrangement configured to hold the door in at least one of the open position and the closed position when the door is in the one of the open position and the closed position until an external force is applied, in use, to release the latching arrangement.
2. The assembly according to clause 1, wherein the latching arrangement comprises a first part in the structure and a second, separate part in the door, and wherein the first part is configured to interact with the second part to hold the door in the one of the open position and the closed position when the door is in the one of the open position and the closed position.
3. The assembly according to either clause 1 or clause 2, wherein the latching arrangement is further configured to bias the door towards the one of the open position and the closed position when the door is between the one of the open position and the closed position and an intermediate position that is between the open and the closed positions.
4. The assembly according to any of clauses 1 to 3, further comprising at least one guide for guiding the movement of the door relative to the structure.
*5.* The assembly according to clause 4, wherein the guide comprises at least one of a male or female member for engaging with a corresponding other of a male or female member of the structure.
6. The assembly according to any one of the preceding clauses, wherein the latching arrangement is a mechanical latching arrangement.
7. The assembly according to clause 6, wherein the mechanical latching arrangement comprises a cam, the cam comprising a cam element disposed in one of the door and the structure and at least one follower disposed in the other of the door and the structure.
8. The assembly according to clause 7, wherein the door defines the cam element, wherein the cam element comprises one or more detents, and wherein the at least one follower is configured to engage with the one or more detents when the door is in the one of the open and the closed position to hold the door in the respective open or closed position.
9. The assembly according to either clause 7 or clause 8, wherein the assembly is configured so that the at least one follower is biased towards the cam element.
10. The assembly according to clause 9, wherein the at least one follower is biased towards the cam element by a spring.
11. The assembly according to any one of clause 7 to 10, wherein a surface of the cam element is configured to engage with the at least one follower to depress the at least one follower when the door is between the open and the closed positions.
12. The assembly according to any one of clause 7 to 11, wherein the assembly comprises a spring plunger, the spring plunger comprising a depressible member movably retained in a housing and biased towards the cam element, and wherein the at least one follower is the depressible member.
13. The assembly according to clause 12, wherein the depressible member is configured to roll relative to the cam element when the door is moved relative to the structure.
14. The assembly according to either clause 12 or clause 13, wherein the depressible member is spherical or cylindrical.
*15.* The assembly according to any one of clauses 7 to 14, wherein the one or more detents comprises at least two detents located at opposite end portions of the door in a direction of motion of the door.
16. The assembly according to any one of clauses 1 to 5, wherein the latching arrangement is a magnetic latching arrangement.
17. The assembly according to clause 16, wherein the magnetic latching arrangement comprises at least one stationary magnet disposed in the structure and at least one door magnet disposed in the door, wherein the latching arrangement is configured to magnetically hold the door in one of the open position and the closed position when the door is in the one of the open position and the closed position.
18. The assembly according to either clause 16 or clause 17, wherein the magnetic latching arrangement is configured to:
   magnetically hold the door in the open position when the door is in the open position; and
   magnetically hold the door in the closed position when the door is in the closed position.
19. The assembly according to either clause 17 or clause 18, wherein the at least one door magnet has a first and a second magnetic pole, and the at least one stationary magnet has a first and a second magnetic pole, and wherein:
   the first and second magnetic poles of each magnet have opposite polarity;
   the first and second magnetic poles of each magnet are oriented in a direction substantially orthogonal to a direction of motion of the door; and
   the first pole of the door magnet and the first pole of the stationary magnet are facing in substantially opposite directions and are of the same polarity.
20. The assembly according to any one of clauses 17 to 19, wherein the at least one door magnet has a first and a second magnetic pole, and the at least one stationary magnet has a first and a second magnetic pole, and wherein:
   the first and second magnetic poles of each magnet have opposite polarity;
   the first and second magnetic poles of each magnet are oriented in a direction substantially parallel to a direction of motion of the door; and
   the first pole of the door magnet and the first pole of the stationary magnet are facing in substantially opposite directions and are of the same polarity.
21. The assembly according to any one of clauses 17 to 20, wherein the at least one door magnet and the least one stationary magnet is substantially cuboidal, each having a longer edge in the direction of motion;
   wherein the centroid of the at least one door magnet is equidistant, in the direction of motion, from the ends of the door; and
   wherein the centroid of the at least one stationary magnet is equidistant, in the direction of motion, from the open and the closed position.
22. The assembly according any one of clauses 17 to 21, wherein the door has a lower face adjacent to an upper face of the structure, and wherein:
   the at least one door magnet is disposed within a corresponding recess in the lower face of the door so as not to be visible in use; and
   the at least one stationary magnet is located beneath the upper face of the structure so as not to be visible in use.
23. The assembly according to any one of clauses 1 to 22, wherein the door is substantially flat and elongate in the direction of motion.
24. The assembly according to any one of clauses 1 to 23, wherein the door is preferably between 14 mm and 15 mm in length in a direction parallel to the sliding direction, preferably between 11 mm and 12 mm in length perpendicular to the direction of motion, and preferably between 1 mm and 2 mm thick.
25. The assembly according to any one of clauses 1 to 24, wherein the structure comprises a recessed portion having a complementary shape and size to the door, the recessed portion configured to receive the door in use and to permit movement of the door between the open and the closed position.
26. The assembly according to clause 25, wherein a surface of the recessed portion further comprises the opening, and the opening is located towards an end of the recessed portion corresponding to the closed position.
27. The assembly according to any one of clauses 1 to 26, wherein the material of the structure and the door is Polycarbonate/Acrylonitrile Butadiene Styrene (PC/ABS).
28. A system comprising a heating apparatus arranged to heat aerosolisable material to volatalise at least one component of the aerosolisable material, and an assembly according to any of clauses 1 to 27 for use with the heating apparatus, wherein the heating apparatus comprises:
   at least one heater element arranged within a heater housing, the heater element configured to heat the aerosolisable material in use.

## Claims

1. An assembly for use in an apparatus for heating aerosolisable material to volatalise at least one component of the aerosolisable material to generate an inhalable aerosol, the assembly comprising:
a structure delimiting an opening through which aerosolisable material can be removably inserted into the apparatus;
a door coupled to the structure and movable between an open position where access to the opening is unrestricted, and a closed position where access to the opening is restricted; and
a latching arrangement configured to hold the door in at least one of the open position and the closed position when the door is in the one of the open position and the closed position until an external force is applied, in use, to release the latching arrangement.

2. The assembly according to claim 1, wherein the latching arrangement comprises a first part in the structure and a second, separate part in the door, and wherein the first part is configured to interact with the second part to hold the door in the one of the open position and the closed position when the door is in the one of the open position and the closed position.

3. The assembly according to either claim 1 or claim 2, wherein the latching arrangement is further configured to bias the door towards the one of the open position and the closed position when the door is between the one of the open position and the closed position and an intermediate position that is between the open and the closed positions.

4. The assembly according to any of claims 1 to 3, further comprising at least one guide for guiding the movement of the door relative to the structure.

5. The assembly according to claim 4, wherein the guide comprises at least one of a male or female member for engaging with a corresponding other of a male or female member of the structure.

6. The assembly according to any one of claims 1 to 5, wherein the latching arrangement is a magnetic latching arrangement.

7. The assembly according to claim 6, wherein the magnetic latching arrangement comprises at least one stationary magnet disposed in the structure and at least one door magnet disposed in the door, wherein the latching arrangement is configured to magnetically hold the door in one of the open position and the closed position when the door is in the one of the open position and the closed position.

8. The assembly according to either claim 6 or claim 7, wherein the magnetic latching arrangement is configured to:
magnetically hold the door in the open position when the door is in the open position; and
magnetically hold the door in the closed position when the door is in the closed position.

9. The assembly according to either claim 7 or claim 8, wherein the at least one door magnet has a first and a second magnetic pole, and the at least one stationary magnet has a first and a second magnetic pole, and wherein:
the first and second magnetic poles of each magnet have opposite polarity; the first and second magnetic poles of each magnet are oriented in a direction substantially orthogonal to a direction of motion of the door; and
the first pole of the door magnet and the first pole of the stationary magnet are facing in substantially opposite directions and are of the same polarity.

10. The assembly according to any one of claims 7 to 9, wherein the at least one door magnet has a first and a second magnetic pole, and the at least one stationary magnet has a first and a second magnetic pole, and wherein:
the first and second magnetic poles of each magnet have opposite polarity;
the first and second magnetic poles of each magnet are oriented in a direction substantially parallel to a direction of motion of the door; and
the first pole of the door magnet and the first pole of the stationary magnet are facing in substantially opposite directions and are of the same polarity.

11. The assembly according to any one of claims 1 to 10, comprising a sleeve configured to encompass a perimeter of the apparatus for heating aerosolisable material, wherein the structure is a top panel structure and the top panel structure is removably fixed to the sleeve.

12. The assembly according to claim 11, comprising retaining means for retaining the top panel structure to the sleeve.

13. The assembly according to claim 12, wherein the retaining means comprises a plurality of clips.

14. The assembly according to any one of claims 1 to 13, comprising a gasket to provide a seal between the structure and an interior of the apparatus for heating aerosolisable material.

15. A system comprising a heating apparatus arranged to heat aerosolisable material to volatalise at least one component of the aerosolisable material, and an assembly according to any of claims 1 to 14 for use with the heating apparatus, wherein the heating apparatus comprises:
at least one heater element arranged within a heater housing, the heater element configured to heat the aerosolisable material in use.
